# EUROPÄISCHE PATENTSCHRIFT

(11) **EP 2 066 552 B1**
(45) Veröffentlichungstag und Bekanntmachung des Hinweises auf die Patenterteilung: **15.06.2011**
(21) Anmeldenummer: 07818104.7
(22) Anmeldetag: 11.09.2007
(51) Int. Cl.: B62D 25/14

(54) **HYBRIDQUERTRÄGER FÜR EIN FAHRZEUG UND VERFAHREN ZUR HERSTELLUNG UND ZUM EINBAU EINES HYBRIDQUERTRÄGERS**
HYBRID CROSS BAR FOR A MOTOR VEHICLE AND METHOD FOR THE PRODUCTION AND FOR THE INSTALLATION OF A HYBRID CROSS BAR
TRAVERSE HYBRIDE POUR VEHICULE ET PROCEDE DE FABRICATION ET DE MONTAGE D'UNE TRAVERSE HYBRIDE

(30) Priorität: 11.09.2006 DE 102006043262
(43) Veröffentlichungstag der Anmeldung: 10.06.2009
(73) Patentinhaber: Johnson Controls GmbH, 51399 Burscheid (DE)
(72) Erfinder: ANGENHEISTER, Paul, 47918 Tönisvorst (DE); BEER, Thomas, 47929 Grefrath (DE); MAI, Alfred, 42499 Hückeswagen (DE); KIERSPEL, Klaus, 51503 Rösrath (DE); SILVA, Norberto, 45327 Essen (DE); ZIMMERMANN, Jochen, 42399 Wuppertal (DE); ARBANAS, Viktor, 5400 Baden (CH); MAAG, Michael, 9470 Buchs (CH); MANNEK, Carsten, 6800 Feldkirch (AT); OERTLE, Max, 9493 Mauren (LI); DORNSCHEIDT, Christian, 40629 Düsseldorf (DE); HEIN, Matthias, 45888 Gelsenkirchen (DE); HINZ, Martin, 47661 Issum (DE); HIRT, Mark, 44791 Bochum (DE); SEYFRIED, Peter, 44145 Dortmund (DE); ZÖRNACK, Markus, 44369 Dortmund (DE)
(74) Vertreter: Schwöbel, Thilo K.
(86) Internationale Anmeldenummer: PCT/EP2007/007905
(87) Internationale Veröffentlichungsnummer: WO 2008/031561

(56) Entgegenhaltungen:
- DE-A1-102004 025 245
- FR-A- 2 783 794

## Beschreibung

Die vorliegende Erfindung betrifft einen Hybridquerträger für ein Kraftfahrzeug, wobei die Abstützung des Hybridquerträgers direkt oder indirekt an wenigstens einer Karosseriestelle des Kraftfahrzeugs mittels eines Verformungselements vorgesehen ist, wobei das Verformungselement in einem ersten Teilbereich mittels einer Kunststoffumschließung umschlossen vorgesehen ist. Weiterhin betrifft die vorliegende Erfindung ein Verfahren zur Herstellung und zum Einbau eines Hybridquerträgers.

Hybridquerträger sind allgemein bekannt. Beispielsweise ist aus der deutschen Offenlegungsschrift DE 10 2004 025 245 A1 ein Hybridquerträger für Kraftfahrzeuge bekannt, wobei zur Anbindung des Hybridquerträgers an die A-Säule eines Kraftfahrzeugs Metalleinlagen vorgesehen sind, die mit der aus Kunststoff vorgesehenen Armaturentafel verbunden sind. Die Metalleinlagen weisen Rippen (Bezugszeichen 22) auf, die in eine Kunststoffmatrix eingeschlossen sind. Nachteilig ist hierbei, dass der Zustand der Rippen, insbesondere eine Verformung der Rippen, etwa nach einem erfolgten Fahrzeugzusammenstoß oder dergleichen, nicht nachgeprüft werden kann, weil die Rippen mit der Kunststoffmatrix umgeben sind.

Es war daher die Aufgabe der vorliegenden Erfindung, einen Hybridquerträger zur Verfügung zu stellen, der die Nachteile des Standes der Technik nicht aufweist.

Gelöst wird diese Aufgabe mit einem Hybridquerträger für ein Fahrzeug, wobei die Abstützung des Hybridquerträger direkt oder indirekt an wenigstens einer Karosseriestelle des Kraftfahrzeugs mittels eines Verformungselementes vorgesehen ist, wobei das Verformungselement in einem ersten Teilbereich mittels einer Kunststoffumschließung umschlossen vorgesehen ist, wobei ferner das Verformungselement in einem zweiten Teilbereich einen außerhalb der Kunststoffumschließung vorgesehenen Verformungsbereich aufweist. Hierdurch ist es vorteilhaft möglich, dass der Zustand des zweiten Teilbereichs des Verformungselementes, insbesondere der Zustand des Verformungsbereichs in einer Situation beispielsweise nach einem Fahrzeugzusammenstoß, in einfacher Weise ermittelt werden kann, beispielsweise dadurch, dass eine Inspektion an dieser Stelle des Hybridquerträgers durchgeführt wird. Hierdurch ist es erfindungsgemäß vorteilhaft möglich, dass in einfacher Weise entschieden werden kann, ob es notwendig ist, nach einer Unfallsituation den Hybridquerträger komplett, d.h. inklusive des Verformungselementes auszutauschen. Ferner ist es erfindungsgemäß dadurch möglich, dass die Verformung des Verformungsbereichs nicht durch die Einbettung des Verformungsbereichs in die Kunststoffmatrix beeinträchtigt wird. Hierdurch kann in genauer Weise das Verformungsverhalten des Verformungsbereichs eingestellt werden.

Bevorzugt ist erfindungsgemäß, dass der zweite Teilbereich ein Dehnbereich aufweist. Hierdurch können in besonders bevorzugter Weise Kräfte aufgenommen werden, die bei einem Frontcrash (Vorwärtsunfall) entstehen und die beiden A-Säulen des Kraftfahrzeugs beispielsweise auseinander drücken, so dass der Hybridquerträger der Bewegung der A-Säulen folgen muss, ohne dabei den inneren Zusammenhalt zu vertiefen bzw. durchzubrechen. Durch die Realisierung des zweiten Teilbereichs zumindest teilweise als Dehnbereich ist es daher möglich, auch nach einem schweren Frontcrash des Kraftfahrzeugs eine stabile Anbindung des Hybridquerträgers an der Karosserie des Fahrzeugs und insbesondere an den A-Säulen des Fahrzeugs zu realisieren.

Weiterhin ist erfindungsgemäß bevorzugt, dass der Hybridquerträger zur Abstützung der Instrumentenkonsole des Fahrzeugs vorgesehen ist bzw. dass die Karosseriestelle im Bereich der A-Säule des Fahrzeugs vorgesehen ist. Hierdurch ist es in besonders einfacher und kostengünstiger Weise möglich, auf bewährte Konstruktionsprinzipien bei der Herstellung und Anordnung von Fahrzeugkomponenten zurückzugreifen, so dass der erfindungsgemäße Hybridquerträger einfach und leicht hergestellt und eingebaut werden kann.

Ein weiterer Gegenstand der vorliegenden Erfindung ist ein Verfahren zur Herstellung und zum Einbau eines Hybridquerträgers nach einem der vorhergehenden Ansprüche, wobei in einem ersten Schritt der Hybridquerträger durch Umschließung des Verformungselements im ersten Teilbereich hergestellt wird und wobei in einem zweiten Schritt der Hybridquerträger durch Befestigung des zweiten Teilbereichs des Verformungselements an der Karosseriestelle eingebaut wird. Hierdurch kann in optimaler Weise eine stabile Anbindung des Hybridquerträgers in jeglichen Fahrzeug- bzw. Unfallsituationen, d. h. insbesondere auch nach einem schweren Frontcrash, realisiert werden.

Ausführungsbeispiele der Erfindung sind in der Zeichnung dargestellt und in der nachfolgenden Beschreibung näher erläutert.
**Figur 1** zeigt eine schematische Ansicht einer Armaturentafel eines Fahrzeugs
**Figur 2** zeigt in vergrößerter Darstellung ein Verformungselement.
**Figuren 3a und 3b** zeigen schematisch einen Querschnitt bzw. einen Längsschnitt durch das Verformungselement.

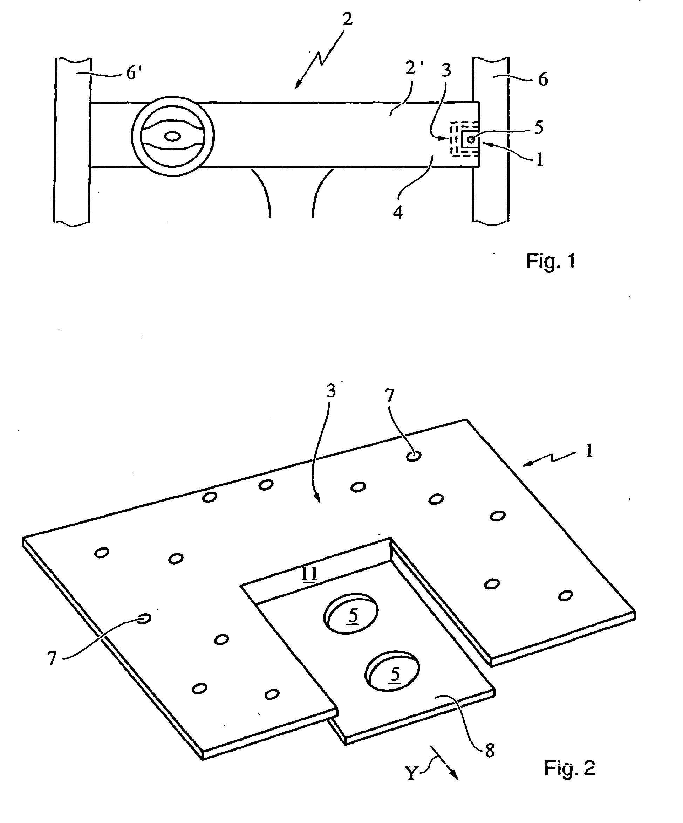

In Figur 1 ist eine schematische Ansicht einer Armaturentafel 2 eines Fahrzeugs dargestellt, wobei die Armaturentafel 2 an einer ersten A-Säule 6 und einer zweiten A-Säule 6' befestigt vorgesehen ist. In **Figur 1** ist lediglich die Befestigung an der ersten A-Säule 6 näher ausgeführt. Die Armaturentafel 2 des Kraftfahrzeugs weist einen Hybridquerträger 2' auf, welcher in der Regel eine Mehrzahl von Metallteilen aufweist, die mit einem Kunststoffmaterial umgeben sind bzw. ummantelt sind bzw. umspritzt sind. Der Hybridquerträger 2' ist über ein Dehnelement 1 mit der ersten A-Säule 6 verbunden. Die Kunststoffmatrix des Hybridquerträgers 2' ist in der **Figur 1** mit dem Bezugszeichen 4 bezeichnet. Hierbei ist erkennbar, dass das Verformungselement 1 einen U-förmig umlaufenden Randbereich 3 aufweist, der formschlüssig in die Kunststoffmatrix 4 des Hybridquerträgers 2' eingebettet ist. Dieser in die Kunststoffmatrix 4 eingebettete Bereich des Verformungselements 1 wird im folgenden auch als erster Teilbereich des Verformungselements 1 bezeichnet, wobei der erste Teilbereich mittels der Kunststoffumschließung 4 umschlossen bzw. umspritzt vorgesehen ist. Mittels eines zweiten Teilbereichs 8 des Verformungselements 1 ist das Verformungselement 1 und damit der Hybridquerträger 2' mit der nicht mittels eines Bezugszeichens bezeichneten Karosserie an einer Karosseriestelle des Fahrzeugs angebunden. In dem dargestellten Beispiel ist die Karosseriestelle zur Anbindung des Hybridquerträgers 2' die A-Säule 6 bzw. die weitere A-Säule 6'. Dort ist der zweite Teilbereich 8 des Verformungselements 1 beispielsweise mit Schraublöchern und Verschraubungsbolzen mit der A-Träger 6 bzw. der Karosseriestelle 6 verbunden.

In **Figur 2** ist in vergrößerter Darstellung das Verformungselement 1 dargestellt. Deutlich erkennbar ist der erste Teilbereich 3, welcher jedoch in der **Figur 2** nicht mittels der Kunststoffumschließung 4 umschlossen dargestellt ist. Der erste Teilbereich 3 weist Öffnungen 7 zum formschlüssigen Verbinden des Verformungselements 1 mit der Kunststoffumschließung 4 auf. Der zweite Teilbereich 8 des Verformungselements 1 ist gegenüber dem ersten Teilbereich 3 abgesetzt vorgesehen. Hierzu weist das Verformungselement 1 eine ursprünglich an der Kunststoffmatrix 4 anliegende Seitenwand 11 auf. Bei einer Kraft in Richtung der y-Achse (in Figur 2 dargestellt) streckt sich der zweite Teilbereich 8 gegenüber dem ersten Teilbereich 3, wobei insbesondere eine Streckung innerhalb der Seitenwand 11 vorgesehen ist. Hierdurch realisiert zumindest die Seitenwand 11 einen Verformungsbereich des Verformungselements 1. Das Verformungsverhalten des Verformungselements 1 kann verändert werden und an den jeweiligen Anwendungszweck angepasst werden.

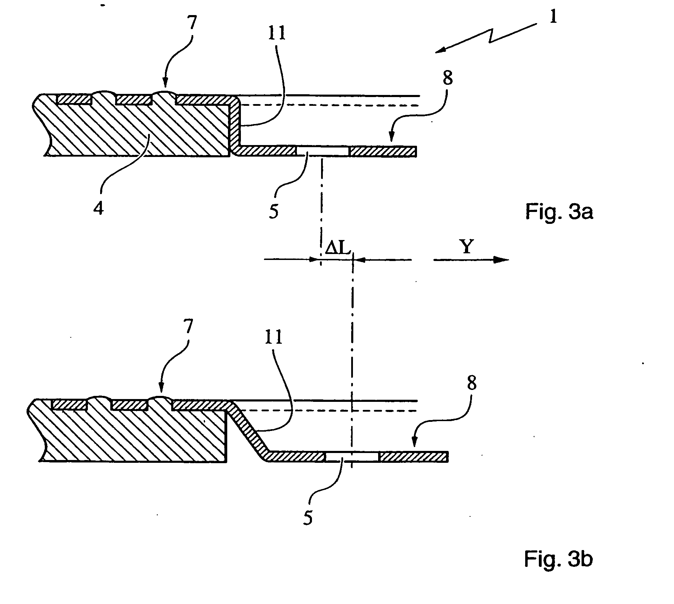

In den **Figuren 3a und 3b** ist schematisch ein Querschnitt bzw. Längsschnitt durch das Verformungselement 1 dargestellt, wobei der Zustand vor einer Verformung in y-Richtung dargestellt ist (**Figur 3a**) und wobei ferner auch der Zustand nach einer Verformung in der y-Richtung (**Figur 3b**) dargestellt ist. Erkennbar ist, dass die Seitenwand als Verformungsbereich und insbesondere als Dehnbereich vorgesehen ist, der gewährleistet, dass trotz eines beispielsweise unfallbedingten Auseinanderschiebens der A-Säulen 6, 6' eine feste Anbindung des Hybridquerträgers an die A-Säulen 6, 6' bzw. generell an die Karosseriestellen 6, 6' beibehalten wird.

Das Verformungselement ist insbesondere als ein aus Stahlblech hergestelltes Dehnelement 1 vorgesehen, das in seinem ersten Teilbereich 3 mit der Kunststoffmatrix 4 des Hybridquerträgers 2' bzw. der Instrumententafel 2 des Fahrzeugs zunächst verspritzt bzw. umschlossen wird und wobei anschließend in dem zweiten Teilbereich 8 des Verformungselements 1 die Anbindung an die Karosseriestelle 6, 6' des Kraftfahrzeugs hergestellt wird und damit der Einbau des Hybridquerträgers realisiert wird. Aus den Figuren 3a und 3b ist ersichtlich, dass eine Längenänderung ΔL realisierbar ist, die eine Veränderung des Abstandes der A-Säulen 6, 6' ausgleichen kann.

### Bezugszeichenliste

- 1: Verformungselement / Dehnelement
- 2: Armaturentafel / Cockpit
- 2': Hybridquerträger
- 3: erster Teilbereich / U-förmig umlaufender Randbereich
- 4: Kunststoffmatrix
- 5: Schraublöcher
- 6, 6': A-Säulen
- 7: Durchbrüche bzw. Öffnungen im ersten Teilbereich des Verformungselements
- 8: Zweiter Teilbereich des Verformungselements
- 11: Seitenwand des Verformungselement
- ΔL: Streckung des Verformungselements

## Patentansprüche

1. Hybridquerträger (2') für ein Kraftfahrzeug, wobei die Abstützung des Hybridquerträgers (2') direkt oder indirekt an wenigstens einer Karosseriestelle (6, 6') des Kraftfahrzeugs mittels eines Verformungselements (1) vorgesehen ist, wobei das Verformungselement (1) in einem ersten Teilbereich (3) mittels einer Kunststoffumschließung (4) umschlossen vorgesehen ist, **dadurch gekennzeichnet, dass** das Verformungselement (1) in einem zweiten Teilbereich (8) einen außerhalb der Kunststoffumschließung (4) vorgesehenen Verformungsbereich aufweist.

2. Hybridquerträger (2') nach Anspruch 1, **dadurch gekennzeichnet, dass** der zweite Teilbereich (8) einen Dehnbereich aufweist.

3. Hybridquerträger (2') nach einem der vorhergehenden Ansprüche, **dadurch gekennzeichnet, dass** der Hybridquerträger (2') zur Abstützung der Instrumentenkonsole des Fahrzeugs vorgesehen ist.

4. Hybridquerträger (2') nach einem der vorhergehenden Ansprüche, **dadurch gekennzeichnet, dass** die Karosseriestelle (6, 6') im Bereich der A-Säule (6, 6') des Fahrzeugs vorgesehen ist.

5. Verfahren zur Herstellung und zum Einbau eines Hybridquerträgers (2') nach einem der vorhergehenden Ansprüche, **dadurch gekennzeichnet, dass** in einem ersten Schritt der Hybridquerträger (2') durch Umschließung des Verformungselements (1) im ersten Teilbereich (3) hergestellt wird und dass in einem zweiten Schritt der Hybridquerträger (2') durch Befestigung des zweiten Teilbereichs (8) des Verformungselements (1) an der Karosseriestelle eingebaut wird.

## Claims

1. Hybrid cross bar (2') for a motor vehicle, wherein the support of the hybrid cross bar (2') is provided directly or indirectly on at least one body location (6, 6') of the motor vehicle by means of a deformation element (1), wherein the deformation element (1) is provided in a first sub-region (3) in such a manner that it is enclosed by means of a plastic encapsulation (4), **characterized in that**, in a second sub-region (8), the deformation element (1) has a deformation region which is provided outside the plastic encapsulation (4).

2. Hybrid cross bar (2') according to Claim 1, **characterized in that** the second sub-region (8) has an extension region.

3. Hybrid cross bar (2') according to either of the preceding claims, **characterized in that** the hybrid cross bar (2') is intended to support the vehicle dashboard.

4. Hybrid cross bar (2') according to one of the preceding claims, **characterized in that** the vehicle body location (6, 6') is provided in the region of the A pillar (6, 6') of the vehicle.

5. Method for producing and for installing a hybrid cross bar (2') according to one of the preceding claims, **characterized in that**, in a first step, the hybrid cross bar (2') is produced by encapsulating the deformation element (1) in the first sub-region (3) and **in that**, in a second step, the hybrid cross bar (2') is installed by fastening the second sub-region (8) of the deformation element (1) to the vehicle body location.

## Revendications

1. Traverse hybride (2') pour un véhicule automobile, le support de la traverse hybride (2') étant assuré directement ou indirectement au niveau d'au moins un point de la carrosserie (6, 6') du véhicule automobile au moyen d'un élément déformable (1), l'élément déformable (1) étant entouré dans une première région partielle (3) au moyen d'un enveloppement en plastique (4), **caractérisée en ce que** l'élément déformable (1) présente, dans une deuxième région partielle (8), une région de déformation prévue en dehors de l'enveloppement en plastique (4).

2. Traverse hybride (2') selon la revendication 1, **caractérisée en ce que** la deuxième région partielle (8) présente une région étirable.

3. Traverse hybride (2') selon l'une quelconque des revendications précédentes, **caractérisée en ce que** la traverse hybride (2') est prévue pour supporter le tableau de bord du véhicule.

4. Traverse hybride (2') selon l'une quelconque des revendications précédentes, **caractérisée en ce que** le point de la carrosserie (6, 6') est prévu dans la région de la colonne A (6, 6') du véhicule.

5. Procédé de fabrication et de montage d'une traverse hybride (2') selon l'une quelconque des revendications précédentes, **caractérisé en ce que** dans une première étape, la traverse hybride (2') est fabriquée par enveloppement de l'élément déformable (1) dans la première région partielle (3) et **en ce que** dans une deuxième étape, la traverse hybride (2') est montée par fixation de la deuxième région partielle (8) de l'élément déformable (1) sur le point de la carrosserie.
